# EUROPEAN PATENT SPECIFICATION

(11) **EP 2 508 449 B1**
(45) Date of publication and mention of the grant of the patent: **11.12.2013**
(21) Application number: 12162808.5
(22) Date of filing: 02.04.2012
(51) Int. Cl.: B65G 1/00

(54) **Machine to separate a pallet from the respective load**
Maschine zum Trennen einer Palette von ihrer Ladung
Machine pour séparer une palette de sa charge

(30) Priority: 08.04.2011 IT BO20110188
(43) Date of publication of application: 10.10.2012
(73) Proprietor: Toppy S.R.L., 40053 Bazzano (BO) (IT)
(72) Inventor: Piani, Daniele, I-40050 Monte San Pietro (BO) (IT); Tondi, Paolo, I-41013 Castelfranco Emilia (MO) (IT)
(74) Representative: Negrini, Elena

(56) References cited:
- FR-A1- 2 173 872
- FR-A1- 2 588 251
- GB-A- 2 174 357

## Description

The present invention relates to the technical field of the packaging and the preparation of packages and it refers to a machine to separate a pallet from the respective load for example to replace the pallet or a palletized packaging pallet with a different pallet.

The pallets, for example of standard EUR (800mm x 1200mm), EPAL (1000mm x 1200mm), Grocery Manufacturers' Association ((GMA)) and CHEP, are loaded with packaging, products or packs to facilitate the movement or the storage. The pallets of various sizes and standards can be of different quality, materials and costs and it is often necessary to transfer the load, for example consisting of boxes or packs, from a pallet to another one, for example to replace a robust and expensive pallet for transport with a more economical pallet to be stored or to replace a possible pollution carrier pallet with a clean pallet.

FR 2 173 872 A1 discloses a machine to separate an incoming pallet from the above respective load, comprising:
- a support means having two bearing means mutually facing each other and having the same horizontal rotation axis;
- a first rail means perpendicular to the rotation axis and whose central portion is connected to the first bearing means; .
- a second rail means perpendicular to the rotation axis and whose central portion is connected to the second bearing means ;
- a first base means defining a respective plane and perpendicularly connected to said first rail means ;
- a second base means defining a respective plane and perpendicularly connected to said second rail means, the second base means being moved along the second rail means by a translation actuator;
- at least a rotation motor associated with the first and second bearing means for the motorized rotation of the corresponding rail means;
wherein in an initial operating condition, where the incoming pallet and the respective load are placed between the first and second base means, the activation of the translation actuators allows to bring mutually nearer the base means to tighten the incoming pallet and the respective load; the rotation motor allows to rotate the rail means together with the incoming pallet and the respective load until placing the pallet in the upper position where the activation of the translation actuator of the first base means allows to remove the incoming pallet.

An object of the present invention as defined in the appended claims is to provide a machine which allows a faster removal of the pallet from a load.

Another object is to provide a machine which can carry out such separation in an automatic or semi-automatic manner and can preserve the integrity of the pallets.

Further object is to propose a machine which is able to replace the pallet putting the load on a different pallet.

The characteristics of the invention are evidenced in the following with particular reference to the attached drawings, in which:
- figure 1 shows an axonometric view of a supporting means of the machine to separate a pallet from the respective load object of the present invention;
- figure 2 shows an axonometric view of a first rail means connected to the supporting means of figure 1;
- the figure 3 shows an axonometric view from an approximately opposite point of view in respect to that of figure 2 of a second rail means connected to the supporting means of figure 1;
- figure 4 shows the axonometric view of figure 2 to which is added the second rail means of figure 3;
- figure 5 shows an axonometric view of a first base means of the machine;
- figure 6 shows an axonometric view of a second base means of the machine;
- figure 7 shows the axonometric view of figure 2 to which is added the first base means of figure 5 connected to the first rail means;
- the figure 8 shows an axonometric view of a gate means of the machine;
- figure 9 shows the axonometric view of figure 3 to which has been added the gate means of figure 8 associated to the second rail means;
- figure 10 shows the axonometric view of figure 3 to which is added the second base means of figure 6 associated to the second rail means;
- figure 11 shows the axonometric view of figure 3 to which is added the gate means of figure 8 and the second base means of figure 6 associated to the second rail means;
- figure 12 shows the machine to separate a pallet from the respective load object of the present invention in an initial condition of a replacement cycle of a pallet of a packaging consisting of one or more boxes placed on a pallet;
- figures 13 - 27 show some sequenced phases of the replacement cycle of the pallet of a packaging.

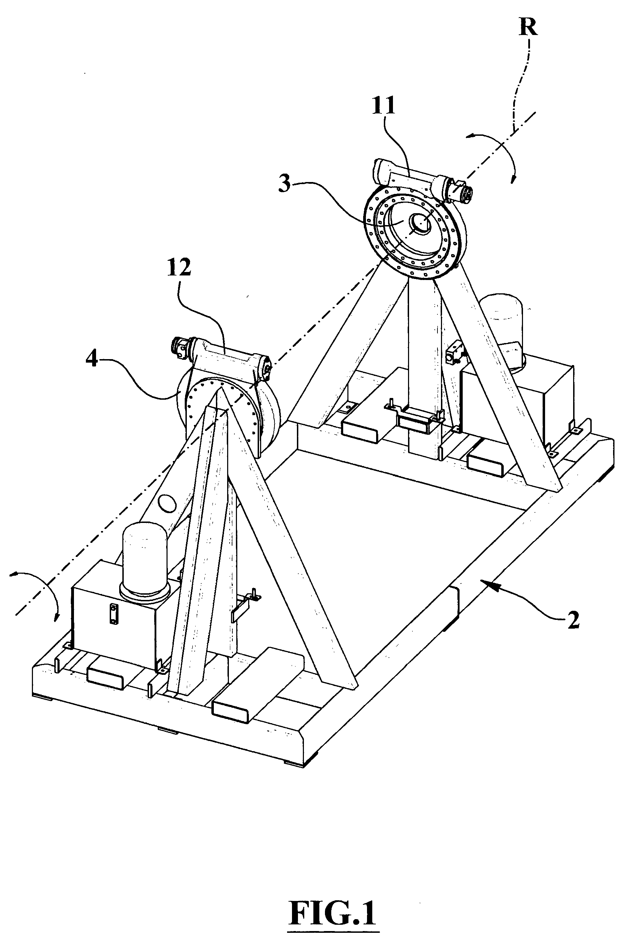

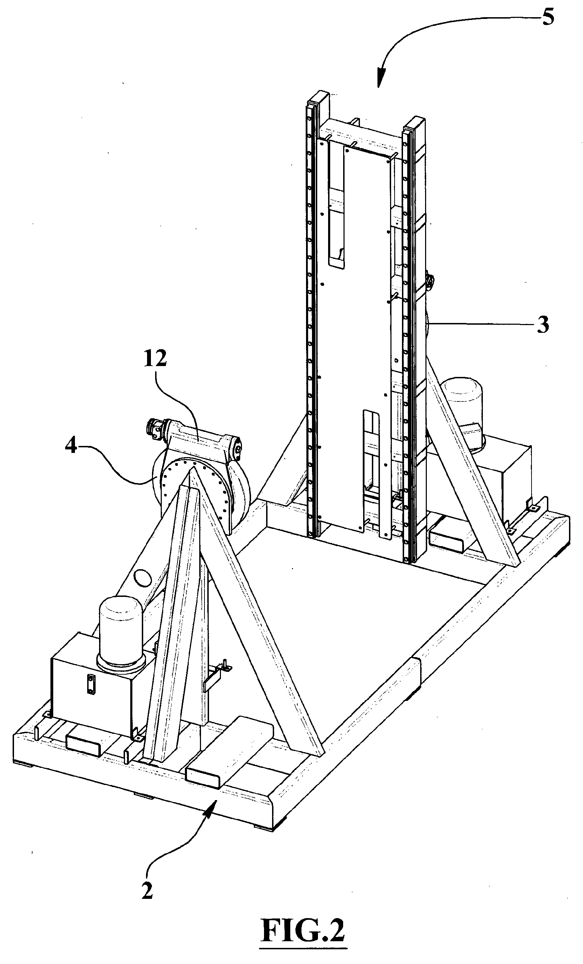

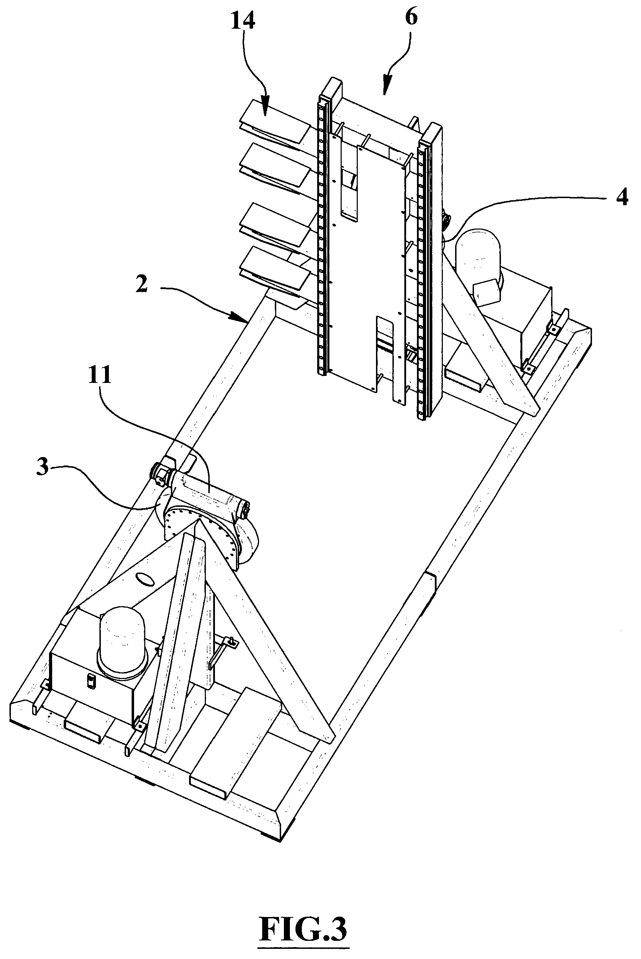

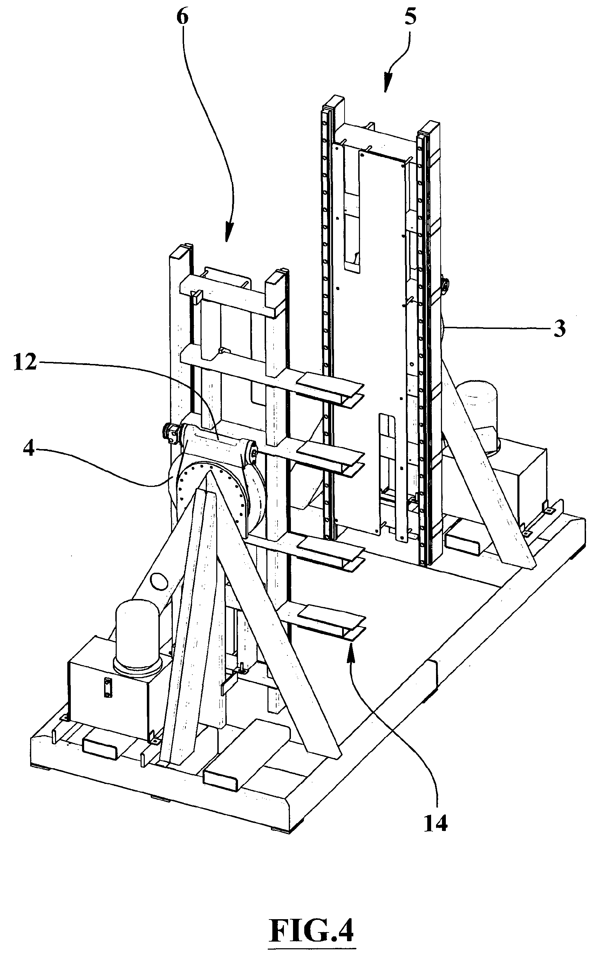

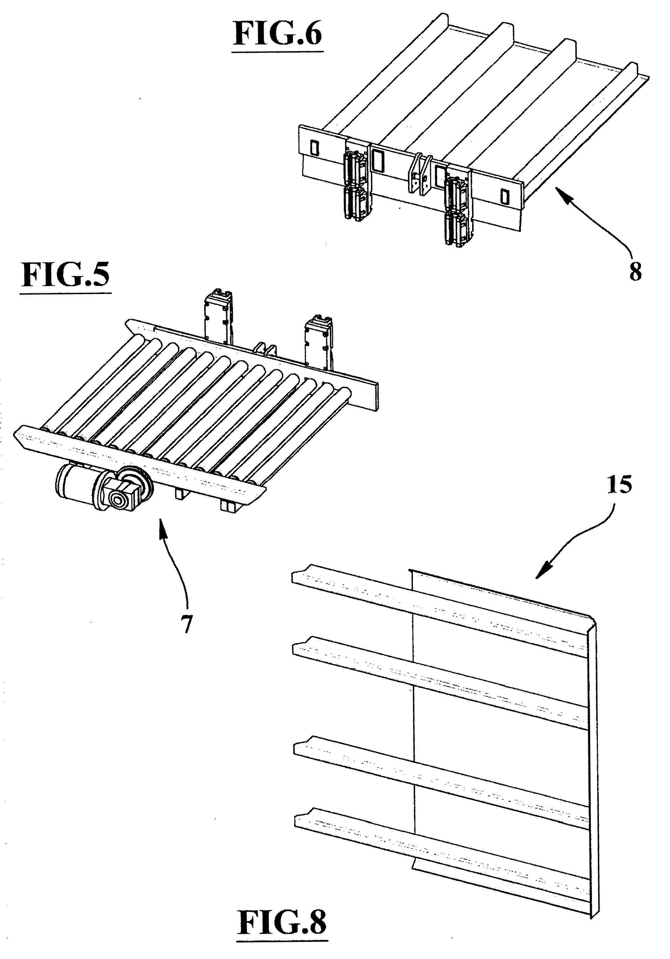

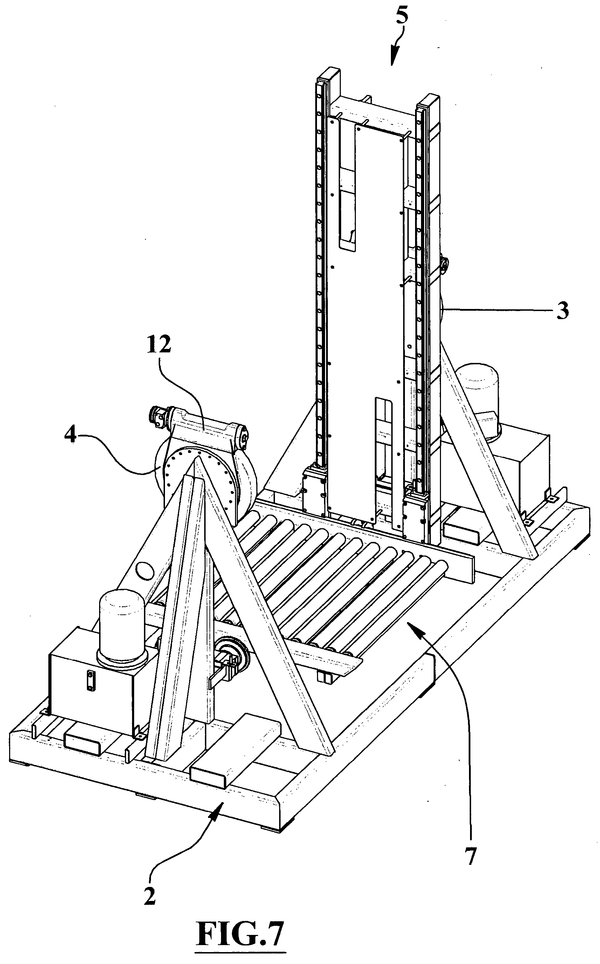

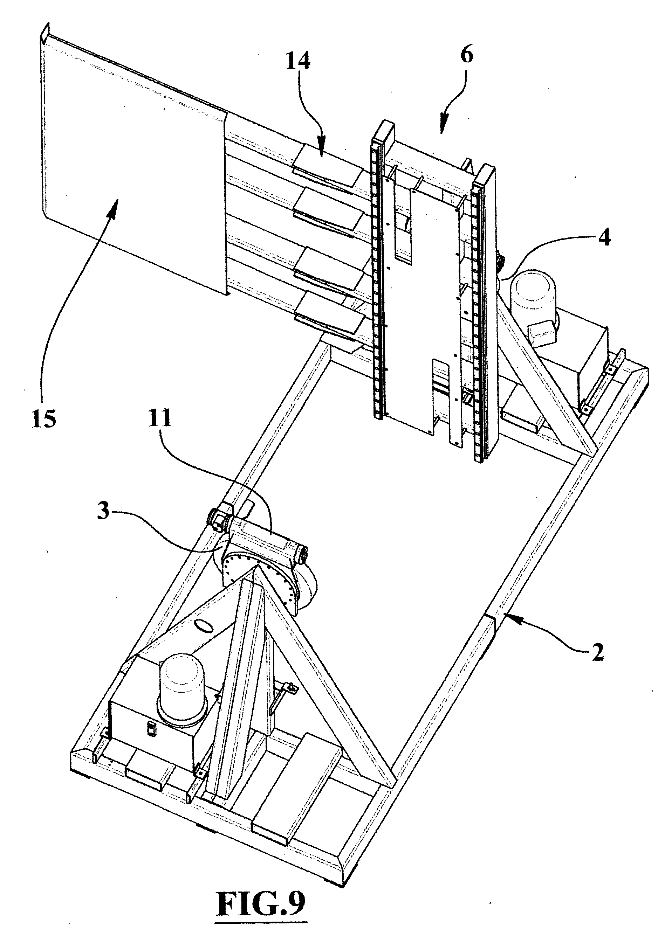

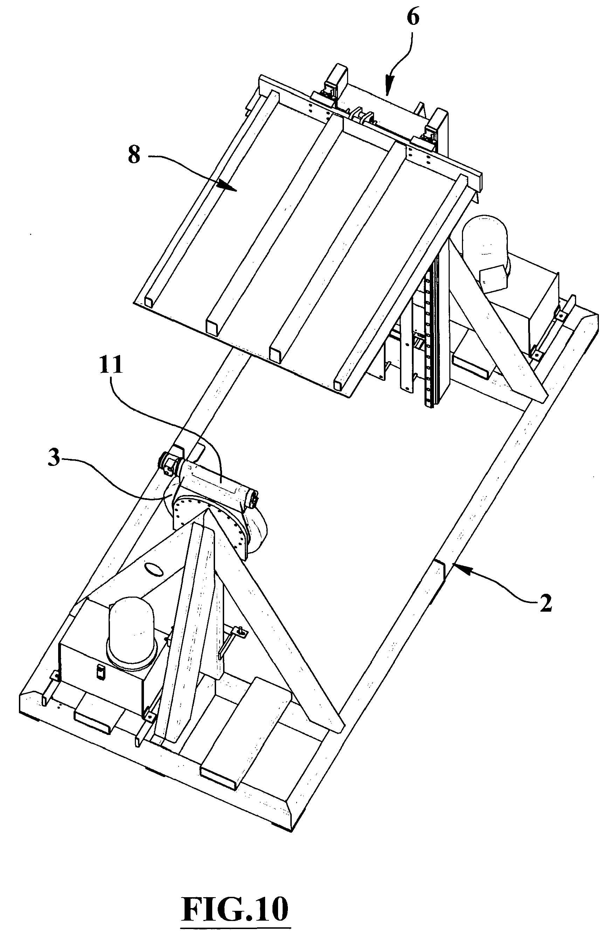

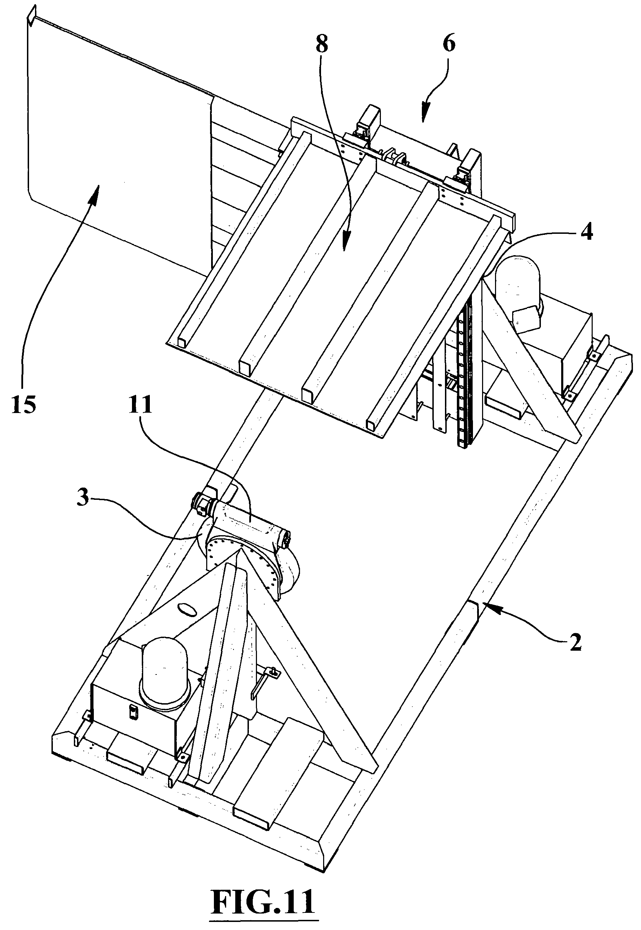

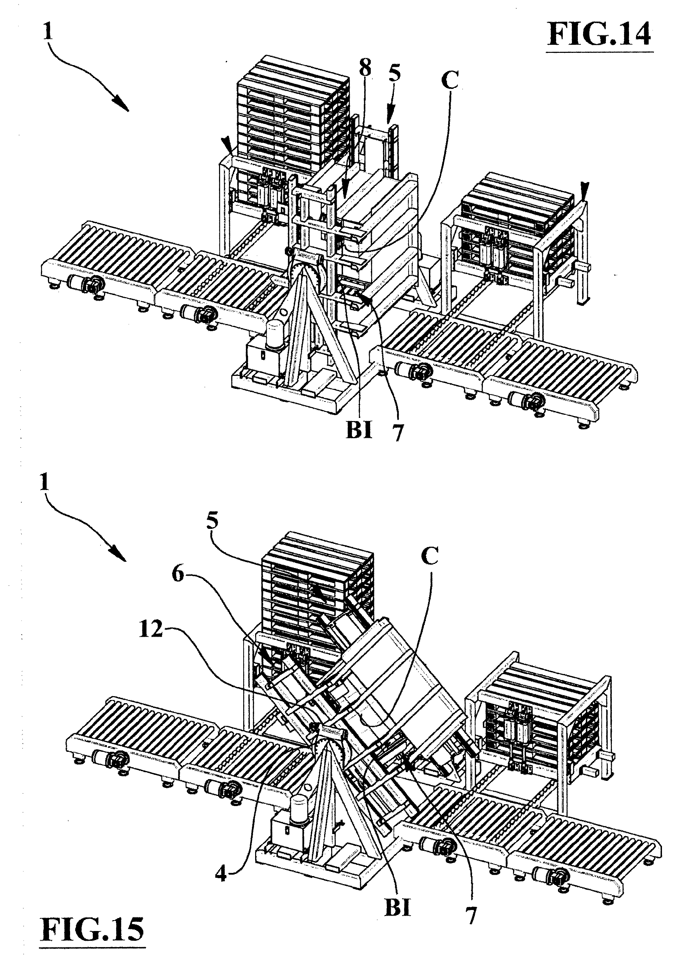

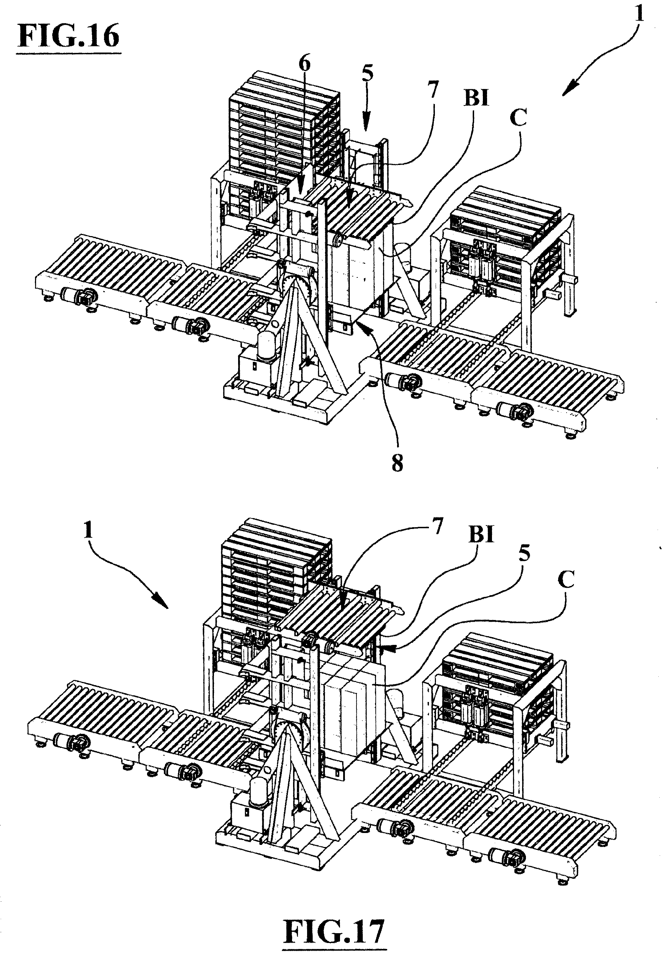

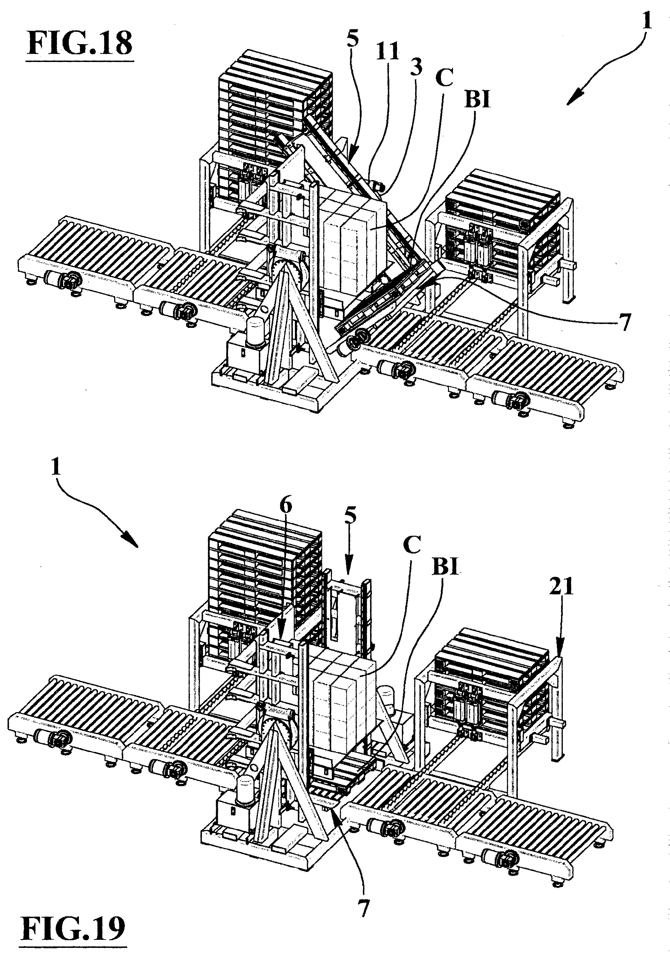

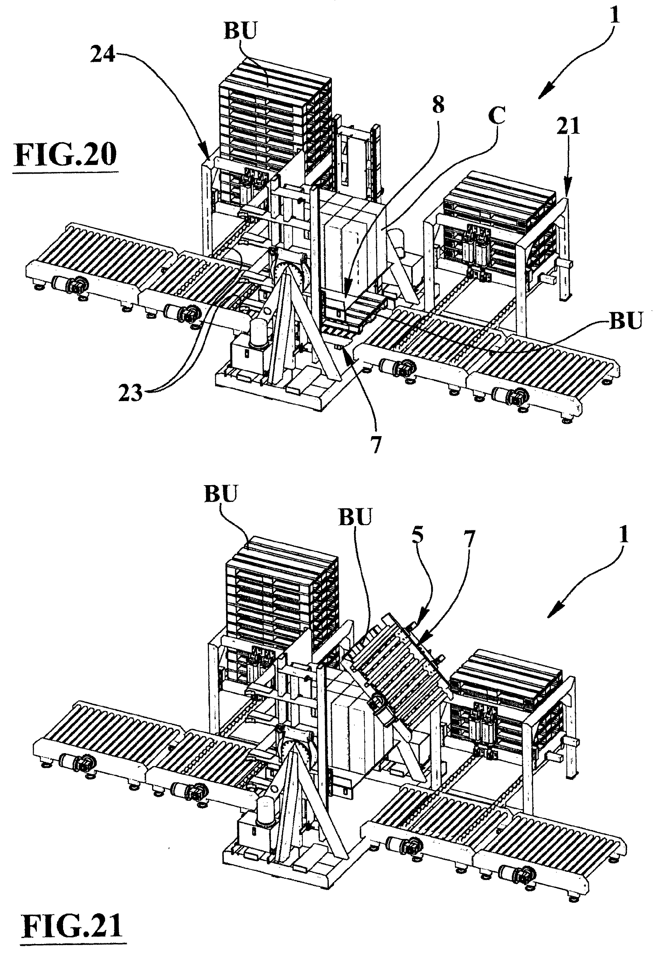

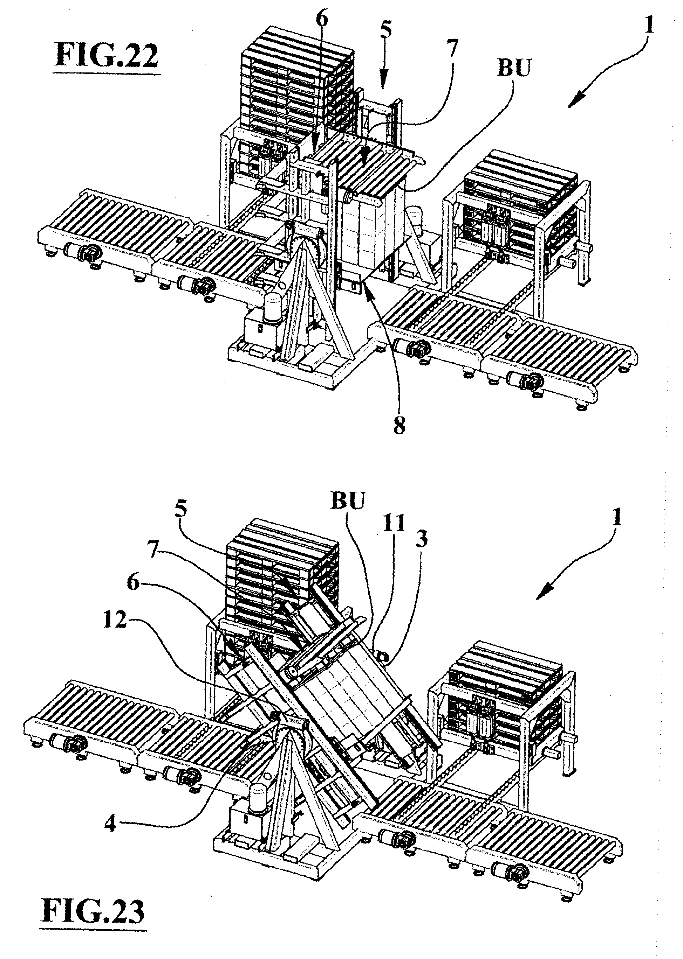

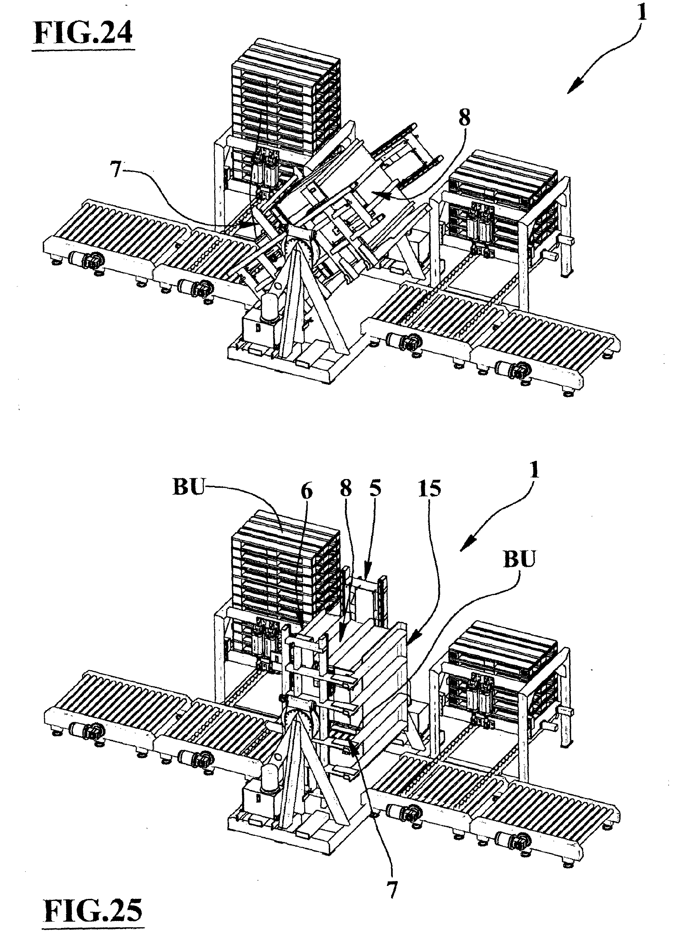

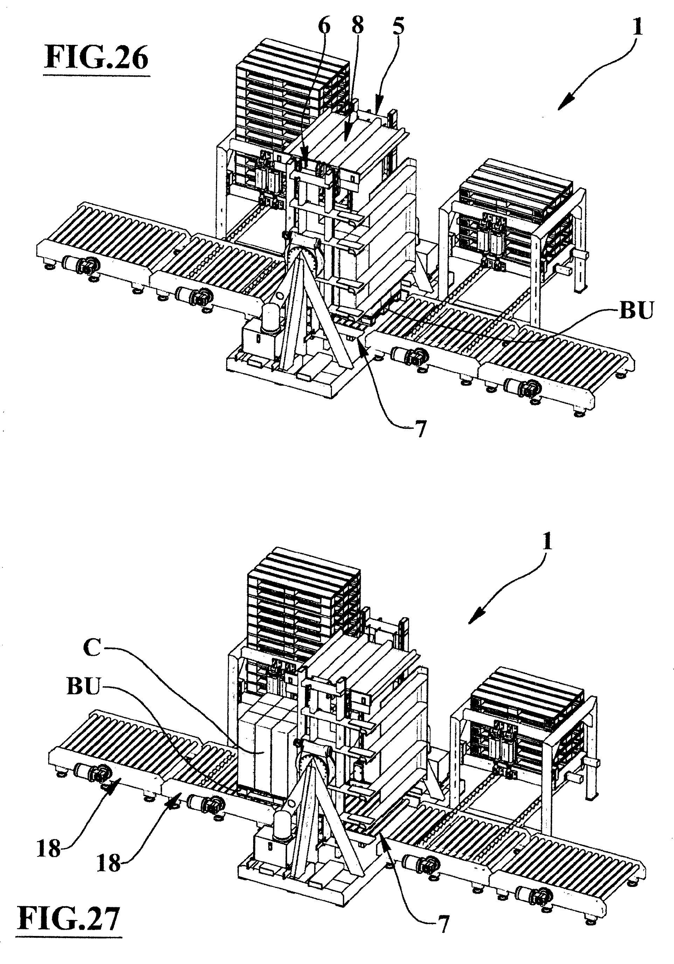

With reference to figures 1 to 27, numeral 1 indicates the machine to separate a pallet from the respective load object of the present invention.

In particular the machine separates an incoming pallet BI from the respective load C lying thereon. The machine, in its more complete embodiment replaces said incoming pallet BI with an outgoing pallet BU supporting the load C.

In the first case the machine releases pallet from its load and it routes said load and pallet in different directions. In the second and more complete embodiment, the machine 1 routes the load C supported by an outgoing pallet BU, which has replaced the original incoming pallet, in an outgoing direction and it routes the original incoming pallet in a different direction for example toward an incoming warehouse 21 for storing incoming pallets.

The machine 1 comprises:
- a support means 2 equipped with a base frame, for example rectangular shaped and assigned to lye on the ground, provided with two respective robust sawhorses or lattices fixed to opposite sides of the frame and each supporting a bearing means, respectively first 3 and second 4; where said bearing means are mutually faced and have the same rotation axis R almost horizontal and perpendicular to the sides of the frame supporting the stands or lattices;
- a first rail means 5, of approximately flat and elongate shaped, and almost perpendicular in respect to the rotation axis R and whose central portion is swivelly connected, by means of its rotation pin and the motion transmission, to the first bearing means 3, where said first rail means 5 is equipped with longitudinal sliding guides;
- a second rail means 6, being shaped and being equipped similarly or equal to the first one, it being also almost perpendicular in respect to the rotation axis R and having the central portion swivelly connected to the second bearing means 4 by means of the respective rotation pin;
- a first base means 7 defining a respective cantilever plane perpendicularly connected to said first rail means 5 by means of its one sliding trolley along said guides of the first rail means 5, said first base means 7 is moved along the first rail means 5 by a respective translation actuator, of known type and not shown, for example of electrical type, hydraulic or pneumatic type;
- a second base means 8 defining a respective plane and cantilevered and perpendicularly connected to said second rail means 6 by means of its one sliding trolley along the guides of the second rail second means 6, said second base means 8 is moved along the second rail means 6 by a respective translation actuator which is also of electrical type, hydraulic or pneumatic type or the like, of type known type but not shown;
- at least one rotation motor 11, 12, of hydraulic or electrical type, associated to a respective second bearing means 4 and/or to the first bearing means 3 for the motorized rotation of the corresponding rail means first 5 or second 6.

In an initial operation condition, in which the incoming pallet BI and the respective load C are positioned above the first base means 7 and below the base second means 8; the activation of the translation actuators of said base means 7, 8 allows to lift the first base means 7 from its one fully lowered condition to a predefined height, reaching a lifted condition of the load C, and allows to bring mutually nearer the base means 7 tightening the incoming pallet BI and the respective load C; the at least one rotation motor 11, 12 allows to rotate the rail means first 5 or second 6 together with the incoming pallet BI and with the respective load C until putting the pallet in upper position in which an activation of the translation actuator of the first base means 7 allows the removal of the incoming pallet BI.

In the more complete and preferred embodiment, both first 3 and second 4 bearing means are equipped with rotation motors, respectively first 11 and second 12, for the synchronous and/or independent rotation of the first 5 and second 6 rail means. In alternative, it is provided that the first bearing means 3 is equipped with the respective first motor 11 and that the second bearing means 4 is equipped with a remote controlled block or brake.

Furthermore, the second rail means 6 of the machine 1 is laterally equipped with hinge means 14, mutually coaxial and almost parallel with respect to the same second rail means 6, and preferably installed on protruding lateral arms. Said hinge means 14 are assigned to swivelly support a gate means 15 driven by a respective opening actuator, between opening conditions, where it does not interfere with the pallet and with its load C allowing the passage between the first 5 or second 6 rail means, and a closing condition in which it interferes or is close to a face of the load C of the pallet placed between said rail means 5, 6 stabilizing and/or supporting the load during the rotation of the pallet and of said its load C.

The plane of the first base means 7 is carried out by a motorized conveyor, for example a motorized belt or chain or preferably a rollers set driven by a electrical motor, as shown in the figures.

The machine 1 comprises furthermore incoming conveyers 17 and outgoing conveyers 18 parallel to a horizontal guiding feeding means placed between the rail means first 5 and second 6 and coplanar and aligned with the conveyor of the base means 7 in the fully lowered condition of this latter defining an incoming and outgoing direction of the incoming pallet BI and of said its load C by means of the pair of rail means first 5 and second 6.

Also said incoming 17 and outgoing conveyers 18 can be of belt or chain type or preferably of motorized roller type.

The first base means 7 is equipped with a set of motorized coupling and releasing means for pallets, for example consisting of "L" shaped nails or hooks, not shown, hinged to the structure of the first base means 7 and driven by electrical hydraulic or pneumatic actuators, Said motorized coupling and releasing means for pallets are assigned to lock and unlock the pallet in respect to the first base means 7 to allow the getting and/or the releasing of said pallet onto the load C and/or below it C.

The incoming conveyor 17 closer to the frame of the support means 2 is provided with an incoming switch means 20 perpendicular in respect to the horizontal guiding feeding means assigned to mover laterally an incoming pallet BI transporting it to an incoming warehouse 21 for the pallets BI separated from their load C.

The outgoing conveyor 18 closer to the frame of the support means 2 is provided with the outgoing switch means 23 perpendicular in respect to the horizontal guiding feeding means assigned to move laterally a pallet BU transporting it from an outgoing warehouse 24 for the substitute pallets BU to be associated to a respective load C.

The incoming 20 and outgoing 23 switch means can be motorized wheel, roller or chain or can be idle wheels, idle rollers or idle balls transfer type with lateral pushing actuators of the pallet onto the said idle rolling means.

Preferably the incoming 20 and outgoing switch means 23 are at the side of the respective incoming 17 and outgoing conveyers 18 opposite to the second rail means 6 having the gate means 15.

The machine comprises furthermore a control means, preferably of digital programmable type, for example having microprocessor with memories for data and programs, with interfaces and/or input ports and control ports to activate: the translation actuators of the base means first 7 and second 8, the opening actuator of the gate means 15, the rotation motor first 11 and second 12 associated to the bearing means first 3 or second 4 for the rotation of the rail means first 5 and second 6, the conveyor feeding motors of the first base means 7 and of the incoming conveyer 17 and outgoing conveyers 18, the motorized coupling and releasing means for pallets of the base first means 7, the motors and/or actuators of the incoming 20 and outgoing switch means 23 and of the incoming 21 and outgoing warehouses 24. Furthermore, said machine 1 comprises optionally a plurality of sensors and detectors of the status and/or position of its moving parts connected to the interfaces and/or input ports of the control means for the feedback controlled driving of the actuators and of the motors.

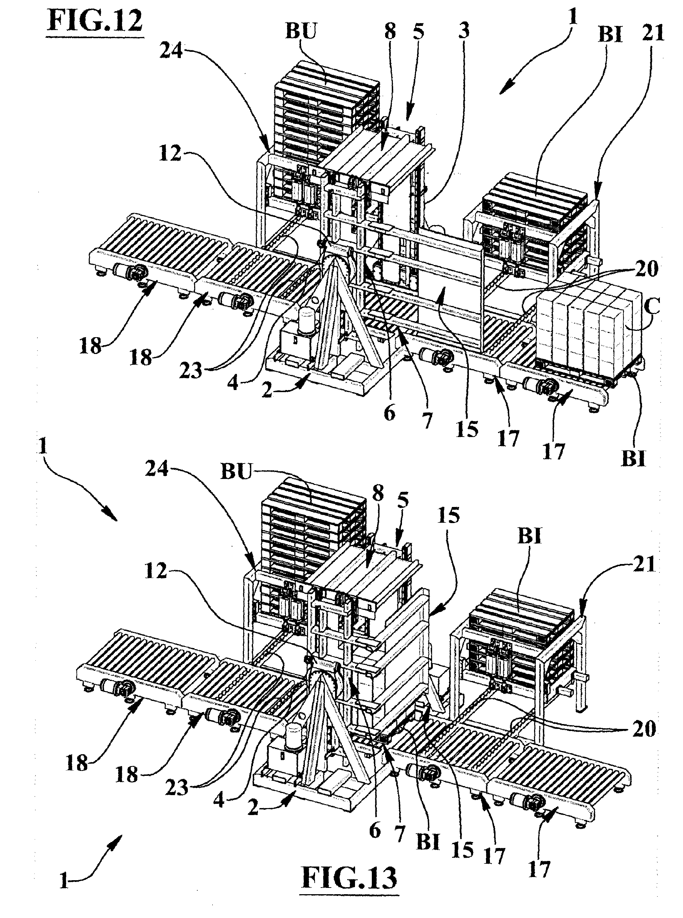

The operation of the more complete and the preferred embodiment to carry out the machine is therefore set-up by the programming of the control mean. In particular a program of the control means which can control, starting from the condition shown in figure 12, the following activations of the elements of the machine schematically shown in the subsequent figures:
- activation of the incoming conveyers 17 and of the conveyor of the first base means 7 bringing the incoming pallet BI with the respective load above the first base means 7 in the fully lowered condition;
- activation of the opening actuator of the gate means 15 to close said gate means 15;
- activation of the translation actuator of the first base means 7 to lift the incoming pallet BI and the load C to a predetermined height;
- activation of the translation actuator of the second base means 8 to tight the incoming pallet BI and the load C between the base means 7, 8;
- activation of the rotation engines 11, 12 of the bearing means first 3 and second 4 rotating about 180° the rail means first 5 and second 6 achieving the overturning of the incoming pallet BI and of its load C;
- activation of the pallets motorized coupling and releasing means of the first base means 7 to get the incoming pallet BI;
- activation of the translation actuator of the first base means 7 to dismiss from the load C the incoming pallet BI by lifting it;
- activation of the rotation motor 11 of the first bearing mans 3 for the rotation of 180° of the corresponding first rail means 5 until the first base means 7 and the incoming pallet BI are below the load C;
- activation of the translation actuator of the first base means 7 to lower the first base means 7 until it becomes coplanar with incoming conveyers 17;
- activation of the motors of the first base means 7 conveyor and of the adjacent incoming conveyor 17 up to place the incoming pallet BI above the incoming switch means 20;
- activation the incoming switch means 20 and the incoming warehouse 21 to insert in this latter 21 the incoming pallet BI;
- activation the outgoing warehouse 23, the outgoing switch means 23, the outgoing conveyor 18 adjacent the first base means 7 and the conveyor of this latter by placing an outgoing pallet BU above this first base means 7;
- activation of the translation actuator of the first base means 7 to lift the outgoing pallet BU to the predetermined height;
- activation of the rotation motor 11 of the first bearing means 3 to rotate 180° the corresponding first rail means 5 until the first base means 7 and the outgoing pallet BU are over to the load C;
- activation of the translation actuator of the first base means 7 to lower the outgoing pallet BU and collate it to the load;
- activation of the rotation motors 11, 12 of the bearing means first 3 and second 4 rotating about 180° the rail means first 5 and second 6 obtaining the overturning of the outgoing pallet BU and of its load C;
- activation of the translation actuator of the first base means 7 to lower the first base means 7 until it becomes coplanar to the outgoing conveyers 18;
- activation of the motors of the first base means 7 conveyor and of the outgoing conveyers 18 by shifting the outgoing pallet BU with the overlying load C toward an exit.

The above-mentioned drives allow to replace in an automatic way the pallet of the load with an other pallet, the programmability of the process allows alternative operations.

## Claims

1. Machine to separate an incoming pallet (BI) from the above respective load (C), comprising at least:
- a support means (2) having two bearing means first (3) and second (4) mutually facing and having the same rotation axis (R) almost horizontal;
- a first rail means (5) almost perpendicular to the rotation axis (R) and whose central portion is connected to the first bearing means (3);
- a second rail means (6) almost perpendicular to the rotation axis (R) and whose central portion is connected to the second bearing means (4);
- a first base means (7) defining a respective plane and cantilevered and perpendicularly connected to said first rail means (5), the first base means (7) is moved along the first rail means (5) by a respective translation actuator; wherein the first base means (7) has a set of motorized coupling and releasing means for pallets, assigned to allow the getting and/or the releasing of a pallet above the load (C) and/or below it (C);
- a second base means (8) defining a respective plane and cantilevered and perpendicularly connected to said second rail means (6), the second base means (8) is moved along the second rail means (6) by a respective translation actuator;
- at least a rotation motor (11, 12) associated with a respective first (3) or second (4) bearing means for the motorized rotation of the corresponding rail means first (5) or second (6);
in an initial operating condition, where the incoming pallet (BI) and the respective load (C) are placed above the first base means (7) and below the second base means (8), the activation of the translation actuators of said base means (7, 8) allows to lift the first base means (7) from its fully lowered condition to a predefined height, reaching a load (C) lifted condition, and it allows to bring mutually nearer the base means (7, 8) so tightening the incoming pallet (BI) and the respective load (C); the at least one rotation motor (11,12) allows to rotate the rail means (5, 6) together with the incoming pallet (BI) and the respective load (C) until placing the pallet in the upper position where the activation of the translation actuator of the first base means (7) allows to remove the incoming pallet (BI).

2. Machine according to claim 1 **characterized in that** the second rail means (6) is laterally provided with hinge means (14) almost parallel to the second rail means (6) and intended to swivel support a gate means (15) driven by a respective opening actuator, between opening conditions, where it doesn't interfere with the pallet and its load (C) allowing the passage between the rail means first (5) or second (6), and a closing condition where it interferes or is close to a lateral side of the load (C) located between these rail means (5, 6) stabilizing and/or supporting the load during the rotation of the pallet and of said its load (C).

3. Machine according to claim 1 or claim 2 **characterized in that** the plane of the first base means (7) is realized with a motorized conveyor and comprising incoming conveyor (17) and outgoing conveyor (18) parallel to horizontal guideline feeding means placed between the rail means first (5) and second (6) and coplanar and aligned to the base means (7) conveyor in the fully lowered condition of the latter defining an incoming and an outgoing direction of the incoming pallet (BI) and of said load (C) by means of the pair of rail means first (5) and second (6).

4. Machine according to any of the previous claims **characterized in that** both the bearing means first (3) and second (4) are equipped with rotation motor respectively first (11) and second (12) for the independent and/or synchronous rotation of the rail means first (5) and second (6).

5. Machine according to claim 3 **characterized in that** one of the incoming conveyors (17) has an incoming switch means (20) perpendicular to the horizontal feeding guideline assigned to laterally shift an incoming pallet (BI) delivering it to an incoming warehouse (21) for pallet (BI) freed from their load (C).

6. Machine according to claim 3 or claim 5 **characterized in that** one of the outgoing conveyors (18) is provided with an outgoing switch means (23) perpendicular to the horizontal feeding guideline assigned to laterally shift a pallet (BU) carried out from an outgoing warehouse (24) for substitute pallets (BU) to be associated to a respective load (C).

7. Machine according to claims 5 and 6 **characterized in that** the incoming (20) and outgoing (23) switches means are associated to the incoming conveyor (17) and outgoing (18) closer to the support means (2) and preferably the incoming (20) and outgoing (23) switches means are on the side of the respective incoming (17) and outgoing (18) conveyors opposite to the second rail means (6) having the gate means (15).

8. Machine according to any of the previous claims **characterized in that** it comprises a control means, preferably a digital programmable type, provided of ports for controlling the translation actuators of the base means first (7) and second (8), the opening actuator of the gate means (15), the rotation motor first (11) and second (12) associated to the first (3) or second (4) bearing means for the rotation of the first (5) and second (6) rail means, the progress motor of the conveyor of the first base means (7) and of the incoming (17) and outgoing (18) conveyors, the motorized coupling and releasing means for the pallets of the first base means (7), and motor and/or actuators of the incoming (20) and outgoing (23) switches means and the incoming (21) and outgoing (24) warehouses; this machine (1) also includes a plurality of sensors and detectors of the condition and/or the position of its moving parts connected to the control means for the feed-back controlled driving of the actuators and the motors.

9. Machine according to claim 8 **characterized in that** the control means is programmed to perform the following operation on the machine parts:
- activation of the incoming conveyor (17) and the first base means (7) conveyor carrying the incoming pallet (BI) with its respective load over the first base means (7) in the fully lowered condition;
- activation of the gate means (15) opening actuator to close this gate means (15);
- activation of the translation actuator of the first base means (7) to lift the incoming pallet (BI) and the load (C) to a predetermined height;
- activation of the translation actuator of the second base means (8) to tight the incoming pallet (BI) and the load (C) between the base means (7, 8);
- activation of the rotation motor (11, 12) of the first (3) and second (4) bearing means rotating of about 180° the rail means first (5) and second (6) achieving the overturning of the incoming pallet (BI) and its load (C);
- activation of the pallets motorized coupling and releasing means of the first base means (7) to get the incoming pallet (BI);
- activation of the translation actuator of the first base means (7) to dismiss from the load (C) the incoming pallet (BI) by lifting it;
- activation of the rotation motor (11) of the first bearing means (3) for a 180° rotation of the corresponding first rail means (5) until the first base means (7) and the incoming pallet (BI) are below the load (C);
- activation of the translation actuator of the first base means (7) to lower the first base means (7) until it becomes coplanar with incoming conveyors (17);
- activation of the motors of the first base means (7) conveyor and of the adjacent incoming conveyor (17) up to place the incoming pallet (BI) above the incoming switch means (20);
- activate the incoming switch means (20) and the incoming warehouse (21) to insert in the latter (21) the incoming pallet (BI);
- activate the outgoing warehouse (23), the outgoing switch means (23), the outgoing conveyor (18) adjacent the first base means (7) and the conveyor of the latter by placing an outgoing pallet (BU) above the first base means (7);
- activation of the translation actuator of the first base means (7) to lift the outgoing pallet (BU) to the predetermined height;
- activation of the rotation motor (11) of the first bearing means (3) for the 180° rotation of the corresponding first rail means (5), until the first base means (7) and the outgoing pallet (BU) are above the load (C);
- activation of the translation actuator of the first base means (7) to lower the outgoing pallet (BU) and to collate it to the load;
- activation of the rotation motors (11, 12) of the first (3) and second (4) bearing means rotating of about 180° the first (5) and second (6) rail means getting out the overturning of the outgoing pallet (BI) and its load (C);
- activation of the translation actuator of the first base means (7) to lower the first base means (7) until it becomes coplanar to the outgoing conveyors (18);
- activation of the motors of the first base means (7) conveyor and of the outgoing conveyors (18), shifting the outgoing pallet (BU) with the overlying load (C) towards the exit

## Patentansprüche

1. Maschine zum Trennen einer ankommenden Palette (BI) von der darauf befindlichen Ladung (C), umfassend mindestens:
• ein Auflagemittel (2) mit zwei Tragemitteln, dem ersten (3) und dem zweiten (4), die einander zugewandt sind und die gleiche, beinahe horizontale Rotationsachse (R) aufweisen;
• ein erstes Schienenmittel (5), beinahe senkrecht zu der Rotationsachse (R), dessen mittlerer Teil mit dem ersten Tragemittel (3) verbunden ist;
• ein zweites Schienenmittel (6), beinahe senkrecht zu der Rotationsachse (R), dessen mittlerer Teil mit dem zweiten Tragemittel (4) verbunden ist;
• ein erstes Basismittel (7), das eine diesbezügliche Ebene definiert und an dem ersten Schienenmittel (5) einseitig aufgehängt und senkrecht damit verbunden ist, wobei das erste Basismittel (7) durch einen diesbezüglichen Verfahr-Aktuator entlang des ersten Schienenmittels (5) verfahren wird;
• wobei das erste Basismittel (7) einen Satz von motorisierten Kopplungs- und Freigabemitteln für Paletten aufweist, die dazu angepasst sind, das Aufnehmen und/oder das Loslassen einer Palette oberhalb der Last (C) und/oder unterhalb davon (C) zu ermöglichen;
• ein zweites Basismittel (8), das eine diesbezügliche Ebene definiert und an dem zweiten Schienenmittel (5) einseitig aufgehängt und senkrecht damit verbunden ist, wobei das zweite Basismittel (8) durch einen diesbezüglichen Verfahr-Aktuator entlang des zweiten Schienenmittels (6) verfahren wird;
• mindestens einen Rotationsmotor (11, 12), der einem diesbezüglichen ersten (3) und zweiten (4) Tragemittel zugeordnet ist zur motorisierten Drehung des diesbezüglichen ersten (5) oder zweiten (6) Schienenmittels;
• wobei in einem anfänglichen Betriebszustand, wo die ankommende Palette (BI) und die jeweilige Last (C) über das erste Basismittel (7) und unter das zweite Basismittel (8) verbracht werden, die Betätigung der Verfahr-Aktuatoren der Basismittel (7, 8) es ermöglicht, das erste Basismittel (7) aus seinem vollständig abgesenkten Zustand zu einer vorbestimmten Höhe anzuheben, die einen angehobenen Zustand der Last (C) erreicht und es ermöglicht, die Basismittel (7, 8) wechselseitig anzunähern und auf diese Weise die ankommende Palette (BI) und die jeweilige Last (C) zu umspannen; wobei der mindestens eine Rotationsmotor (11, 12) es ermöglicht, die Schienenmittel (5, 6) zusammen mit der ankommenden Palette (BI) und der jeweiligen Last (C) zu drehen, bis die Palette in die obere Position versetzt ist, wo die Betätigung des Verfahr-Aktuators des ersten Basismittels (7) es ermöglicht, die ankommende Palette (BI) zu entfernen.

2. Maschine gemäß Anspruch 1, **dadurch gekennzeichnet dass** das zweite Schienenmittel (6) seitlich mit Scharniermitteln (14) versehen ist, die beinahe parallel zu den zweiten Schienenmitteln (6) und dazu bestimmt sind, ein von einem diesbezüglichen Öffnungsaktuator angetriebenes Pfortenmittel (15) zwischen Öffnungszuständen schwenkbar zu lagern, in denen es der Palette und ihrer Ladung (C) nicht ins Gehege kommt und so den Durchgang zwischen den ersten (5) oder zweiten (6) Schienenmitteln ermöglicht, und einem Schließzustand, wo es eine laterale Seite der zwischen diesen Schienenmitteln (5, 6) befindlichen Ladung (C) kontaktiert oder dieser nahe ist und so die Ladung während der Drehung der Palette und ihrer Ladung (C) stabilisiert und/oder sie abstützt.

3. Maschine gemäß Anspruch 1 oder 2, **dadurch gekennzeichnet dass** die Ebene des ersten Basismittels (7) mit einem motorisierten Fördermittel ausgeführt ist und ein Eingangsfördermittel (17) und ein Ausgangsfördermittel (18) parallel zu horizontalen Vorschubmittel-Führungslinien umfasst, die sich zwischen dem ersten (5) und dem zweiten (6) Schienenmittel befinden und koplanar und ausgerichtet zu dem Fördermittel des Basismittels (7) sind, wobei sie in dem vollständig abgesenkten Zustand des letzteren mittels des Paars aus ersten (5) und zweiten (6) Schienenmitteln eine Eingangs- und eine Ausgangsrichtung der eingehenden Palette (BI) und der Last (C) definieren.

4. Maschine gemäß irgendeinem der vorhergehenden Ansprüche, **dadurch gekennzeichnet dass** sowohl das erste (3) wie auch das zweite (4) Tragemittel jeweils mit dem ersten (11) und dem zweiten (12) Rotationsmotor ausgerüstet sind zur unabhängigen und/oder synchronen Drehung des ersten (5) und zweiten (6) Schienenmittels.

5. Maschine gemäß Anspruch 3, **dadurch gekennzeichnet dass** eines der Eingangsfördermittel (17) ein zu der horizontalen Vorschubmittel-Führungslinie senkrechtes Eingangs-Weichenmittel (20) hat, das dazu bestimmt ist, eine eingehende Palette (BI) seitwärts zu verschieben, um sie zu einem Eingangs-Lagerraum (21) für die von ihrer Last (C) befreite Palette (BI) hin zu liefern.

6. Maschine gemäß Anspruch 3 oder 5, **dadurch gekennzeichnet dass** eines der Ausgangsfördermittel (18) mit einem zu der horizontalen Vorschubmittel-Führungslinie senkrechten Ausgangs-Weichenmittel (23) versehen ist, das dazu bestimmt ist, eine Palette (BU), die von einem Ausgangs-Lagerraum (24) für Ersatzpaletten (BU), die mit einer jeweiligen Last (C) versehen werden sollen, ausgetragen wurde, seitwärts zu verschieben.

7. Maschine gemäß Anspruch 5 und 6, **dadurch gekennzeichnet dass** die Eingangs- (20) und Ausgangs- (23) Weichenmittel dem Eingangsfördermittel (17) und dem Ausgangs-Weichenmittel (18) näher dem Auflagemittel (2) zugeordnet sind, und vorzugsweise die Eingangs-(20) und Ausgangs- (23) Weichenmittel sich auf der Seite der jeweiligen Eingangs- (17) und Ausgangsfördermittel (18) gegenüber dem zweiten Schienenmittel (6) befinden, welches das Pfortenmittel (15) aufweist.

8. Maschine gemäß irgendeinem der vorhergehenden Ansprüche, **dadurch gekennzeichnet dass** sie ein Steuermittel umfasst, vorzugsweise vom digital programmierbaren Typ, das mit Anschlüssen versehen ist zum Steuern der Verfahr-Aktuatoren des ersten (7) und des zweiten (8) Basismittels, des Öffnungsaktuators des Pfortenmittels (15), des ersten (11) und des zweiten (12) Rotationsmotors, die dem ersten (3) und dem zweiten (4) Tragemittel für die Drehung des ersten (5) und des zweiten (6) Schienenmittels zugeordnet sind, des Schrittmotors des Fördermittels des ersten Basismittels (7) und der Eingangs- (17) und der Ausgangs- (18) Fördermittel, der motorisierten Kopplungs- und Freigabemittel für die Paletten des ersten Basismittels (7), und den Motoren und/oder Aktuatoren der Eingangs- (20) und Ausgangs- (23) Weichenmittel und der Eingangs-(21) und Ausgangs -(24) Lagerräume; wobei diese Maschine (1) auch eine Vielzahl von Sensoren und Detektoren des Zustandes und/oder der Position ihrer beweglichen Teile beinhaltet, die mit dem Steuermittel zum mittels Rückmeldung gesteuerten Antrieb der Aktuatoren und Motoren verbunden sind.

9. Maschine gemäß Anspruch 8, **dadurch gekennzeichnet dass** das Steuermittel dazu programmiert ist, den folgenden Betrieb der Maschinenteile durchzuführen:
• Aktivieren des Eingangsfördermittels (17) und des Fördermittels des ersten Basismittels (7), welches die ankommende Palette (BI) mit ihrer jeweiligen Last über das erste Basismittel (7) in dem vollständig abgesenkten Zustand trägt;
• Aktivieren des Öffnungsaktuators des Pfortenmittels (15) um dieses Pfortenmittel (15) zu schließen,
• Aktivieren des Verfahr-Aktuators des ersten Basismittels (7), um die ankommende Palette (BI) und die Last (C) auf eine vorbestimmte Höhe anzuheben;
• Aktivierung des Verfahr-Aktuators des zweiten Basismittels (8), um die ankommende Palette (BI) und die Last (C) zwischen den Basismitteln (7, 8) einzuspannen;
• Aktivieren des Rotationsmotors (11, 12) des ersten (3) und des zweiten (4) Tragemittels zum Drehen des ersten (5) und des zweiten (6) Schienenmittels um etwa 180°, um das Umkippen des ankommenden Palette (BI) und ihrer Ladung (C) zu erreichen;
• Aktivieren der motorisierten Kopplungs- und Freigabemittel für Paletten des ersten Basismittels (7), um die ankommende Palette (BI) aufzunehmen;
• Aktivieren des Verfahr-Aktuators des ersten Basismittels (7), um die ankommende Palette (BI) von der Last (C) zu lösen, indem sie angehoben wird;
• Aktivieren des Rotationsmotors (11) des ersten Tragmittels (3) für eine Drehung um 180° des entsprechenden ersten Schienenmittels (5), bis das erste Basismittel (7) und die ankommende Palette (BI) sich unter der Last (C) befinden,
• Aktivieren des Verfahr-Aktuators des ersten Basismittels (7), um das erste Basismittel (7) abzusenken, bis es koplanar mit Eingangsfördermitteln (17) wird;
• Aktivieren der Motoren des Fördermittels des ersten Basismittels (7) und des angrenzenden Eingangsfördermittels (17), bis die ankommende Palette (BI) über das Eingangs-Weichenmittel (20) verbracht ist;
• Aktivieren des Eingangs-Weichenmittels (20) und des Eingangs-Lagerraumes (21), um die ankommende Palette (BI) in den letzteren (21) einzubringen;
• Aktivieren des Ausgangs-Lagerraumes (23), des Ausgangs-Weichenmittels (23), des an das erste Basismittel (7) angrenzenden Ausgangsfördermittels (18) und des Fördermittels des ersten Basismittels, indem eine herausgehende Palette (BU) über das erste Basismittel (7) verbracht wird;
• Aktivieren des Verfahr-Aktuators des ersten Basismittels (7), um die herausgehende Palette (BU) auf die vorbestimmte Höhe anzuheben;
• Aktivieren des Rotationsmotors (11) des ersten Tragmittels (3) für die Drehung des entsprechenden ersten Schienenmittels (5) um 180°, bis das erste Basismittel (7) und die herausgehende Palette (BU) sich über der Last (C) befinden;
• Aktivieren des Verfahr-Aktuators des ersten Basismittels (7), um die herausgehende Palette (BU) abzusenken und sie mit der Last zu vereinigen;
• Aktivieren der Rotationsmotoren (11, 12) der ersten (3) und zweiten (4) Tragemittel, um das erste (5) und das zweite Schienenmittel (6) um etwa 180° zu drehen, um aus dem Kippen der herausgehenden Palette (BU) und ihrer Last (C) heraus zu kommen;
• Aktivieren des Verfahr-Aktuators des ersten Basismittels (7), um das erste Basismittel (7) abzusenken, bis es koplanar mit den Ausgangsfördermitteln (18) wird;
• Aktivieren der Motoren des Fördermittels des ersten Basismittels (7) und der Ausgangsfördermittel (18), wodurch die herausgehende Palette (BU) mit der darauf liegenden Last (C) zum Ausgang hin verschoben wird.

## Revendications

1. Machine destinée à séparer une palette entrante (BI) de la charge (C) respective qui se trouve sur celle-ci, comprenant au moins :
- un moyen formant support (2) qui présente des premier (3) et second (4) moyens formant paliers qui se font face de manière mutuelle et qui présentent le même axe de rotation (R) presque à l'horizontale ;
- un premier moyen formant rail (5) presque perpendiculaire à l'axe de rotation (R) et dont la partie centrale est reliée au premier moyen formant palier (3) ;
- un second moyen formant rail (6) presque perpendiculaire à l'axe de rotation (R) et dont la partie centrale est reliée au second moyen formant palier (4) ;
- un premier moyen formant base (7) qui définit un plan respectif et en porte-à-faux et qui est relié perpendiculairement audit premier moyen formant rail (5), le premier moyen formant base (7) est déplacé le long du premier moyen formant rail (5) par un actionneur de translation respectif ; dans lequel le premier moyen formant base (7) possède un ensemble de moyens motorisés de couplage et de libération des palettes, attribués pour permettre la prise et/ou la libération d'une palette au-dessus de la charge (C) et/ou en dessous de celle-ci (C) ;
- un second moyen formant base (8) qui définit un plan respectif et en porte-à-faux et qui est relié perpendiculairement audit second moyen formant rail (6), le second moyen formant base (8) est déplacé le long du second moyen formant rail (6) par un actionneur de translation respectif ;
- au moins un moteur de rotation (11, 12) associé à l'un respectif des premier (3) ou second (4) moyens formant paliers, pour une rotation motorisée des premier (5) ou second (6) moyens formant rails correspondants ;
dans un état de fonctionnement initial, où la palette entrante (BI) et la charge respective (C) sont placées au-dessus du premier moyen formant base (7) et en dessous du second moyen formant base (8), l'activation des actionneurs de translation desdits moyens formant bases (7, 8) permet de lever à une hauteur prédéfinie le premier moyen formant base (7) à partir de son état entièrement abaissé, en atteignant un état de charge (C) levée, et elle permet de rapprocher de manière mutuelle les moyens formant base (7, 8) en serrant ainsi la palette entrante (BI) et la charge respective (C) ; l'au moins un moteur de rotation (11, 12) permet de faire tourner les moyens formant rails (5, 6) ainsi que la palette entrante (BI) et la charge respective (C) jusqu'au placement de la palette dans la position supérieure où l'activation de l'actionneur de translation du premier moyen formant base (7) permet de retirer la palette entrante (BI).

2. Machine selon la revendication 1, **caractérisée en ce que** le second moyen formant rail (6) est fourni de manière latérale d'un moyen formant charnière (14) presque parallèle au second moyen formant rail (6) et prévue pour soutenir en pivotement un moyen formant porte (15) entraîné par un actionneur d'ouverture respectif, entre des états d'ouverture, où il n'interfère pas avec la palette et avec sa charge (C) en permettant le passage entre le premier (5) ou le second (6) moyen formant rail, et un état de fermeture où il interfère avec un, ou est proche d'un, côté latéral de la charge (C) située entre ces moyens formant rails (5, 6) en stabilisant et/ou en soutenant la charge au cours de la rotation de la palette et de sa dite charge (C).

3. Machine selon la revendication 1 ou 2, **caractérisée en ce que** le plan du premier moyen formant base (7) est défini par un convoyeur motorisé qui comprend un convoyeur d'entrée (17) et un convoyeur de sortie (18) parallèles à un moyen d'approvisionnement selon une direction horizontale placé entre les premier (5) et second (6) moyens formant rails et coplanaire et aligné au moyen formant base (7), le convoyeur dans l'état entièrement abaissé de ce dernier définissant une direction d'entrée et une direction de sortie de la palette entrante (BI) et de ladite charge (C) au moyen de la paire du premier (5) et du second (6) moyens formant rails.

4. Machine selon l'une quelconque des revendications précédentes, **caractérisée en ce que** les deux premier (3) et second (4) moyens formant paliers, sont équipés de manière respective d'un premier (11) et d'un second (12) moteurs de rotation pour la rotation indépendante et/ou synchrone des premier (5) et second (6) moyens formant rails.

5. Machine selon la revendication 3, **caractérisée en ce que** l'un des convoyeurs d'entrée (17) présente un moyen formant aiguillage d'entrée (20) perpendiculaire à la direction d'approvisionnement horizontale attribué à décaler de manière latérale une palette entrante (BI) de façon à la livrer à un entrepôt d'entrée (21) des palettes (BI) libérées de leur charge (C).

6. Machine selon la revendication 3 ou 5, **caractérisée en ce que** l'un des convoyeurs de sortie (18) est fourni avec un moyen formant aiguillage de sortie (23) perpendiculaire à la direction d'approvisionnement horizontale attribué à décaler de manière latérale une palette (BU) qui a été sortie d'un entrepôt de sortie (24), pour des palettes de remplacement (BU) à associer à une charge respective (C).

7. Machine selon les revendications 5 et 6, caractérisée en ce les moyens formant aiguillages d'entrée (20) et de sortie (23) sont associés au convoyeur d'entrée (17) et de sortie (18) plus proche des moyens de support (2) et de préférence les moyens formant aiguillages d'entrée (20) et de sortie (23) se situent sur le côté des convoyeurs d'entrée (17) et de sortie (18) respectifs à l'opposé du second moyen formant rail (6) qui présente le moyens formant porte (15).

8. Machine selon l'une quelconque des revendications précédentes, **caractérisée en ce qu'**elle comprend un moyen de commande, de préférence d'un type programmable numérique, fourni de ports pour la commande des actionneurs de translation des premier (7) et second (8) moyens formant base, l'actionneur d'ouverture du moyen formant porte (15), les premier (11) et second (12) moteurs de rotation associés au premier (3) ou au second (4) moyen formant palier pour la rotation des premier (5) et second (6) moyens formant rails, le moteur d'entraînement du convoyeur du premier moyen formant base (7) et des convoyeurs d'entrée (17) et de sortie (18), les moyens motorisés de couplage et de libération des palettes du premier moyen formant base (7), et le moteur et/ou les actionneurs des moyens formant aiguillages d'entrée (20) et de sortie (23) et les entrepôts d'entrée (21) et de sortie (24) ; cette machine (1) comprend également une pluralité de capteurs et de détecteurs de l'état et/ou de la position de ses pièces mobiles reliées aux moyens de commande pour un entraînement commandé par rétroaction des actionneurs et des moteurs.

9. Machine selon la revendication 8, **caractérisée en ce que** le moyen de commande est programmé de façon à effectuer les opérations suivantes sur les parties de la machine :
- activation du convoyeur d'entrée (17) et du convoyeur du premier moyen formant base (7) qui porte la palette entrante (BI) avec sa charge respective sur celle-ci, le premier moyen formant base (7) se trouvant dans un état entièrement abaissé ;
- activation de l'actionneur d'ouverture du moyen formant porte (15) de façon à fermer ce moyen formant porte (15) ;
- activation de l'actionneur de translation du premier moyen formant base (7) de façon à lever la palette entrante (BI) et la charge (C) à une hauteur prédéterminée ;
- activation de l'actionneur de translation du second moyen formant base (8) de façon à serrer la palette entrante (BI) et la charge (C) entre les moyens formant bases (7, 8) ;
- activation du moteur de rotation (11, 12) des premier (3) et second (4) moyens formant paliers de façon à faire tourner d'environ 180° les premier (5) et second (6) moyens formant rails de manière à accomplir un renversement de la palette entrante (BI) et de sa charge (C) ;
- activation des moyens motorisés de couplage et de libération de palettes du premier moyen formant base (7) de façon à obtenir la palette entrante (BI) ;
- activation de l'actionneur de translation du premier moyen formant base (7) de façon à dissocier la palette entrante (BI) de la charge (C) en la levant ;
- activation du moteur de rotation (11) du premier moyen formant palier (3) de façon à faire tourner de 180° le premier moyen formant rail (5) correspondant jusqu'à ce que le premier moyen formant base (7) et la palette entrante (BI) se situent sous la charge (C) ;
- activation de l'actionneur de translation du premier moyen formant base (7) de façon à abaisser le premier moyen formant base (7) jusqu'à ce qu'il devienne coplanaire aux convoyeurs d'entrée (17) ;
- activation des moteurs du convoyeur du premier moyen formant base (7) et du convoyeur d'entrée adjacent (17) jusqu'à placer la palette entrante (BI) au-dessus du moyens formant aiguillage d'entrée (20) ;
- activation des moyens formant aiguillage d'entrée (20) et de l'entrepôt d'entrée (21) de façon à insérer dans ce dernier (21) la palette entrante (BI) ;
- activation de l'entrepôt de sortie (23), du moyen formant aiguillage de sortie (23), du convoyeur de sortie (18) adjacent au premier moyen formant base (7) et du convoyeur de ce dernier en plaçant une palette sortante (BU) sur le premier moyen formant base (7) ;
- activation de l'actionneur de translation du premier moyen formant base (7) de façon à lever la palette de sortie (BU) à une hauteur prédéterminée ;
- activation du moteur de rotation (11) du premier moyen formant palier (3) de façon à faire tourner de 180° le premier moyen formant rail (5) correspondant jusqu'à ce que le premier moyen formant base (7) et la palette de sortie (BU) se situent au-dessus de la charge (C) ;
- activation de l'actionneur de translation du premier moyen formant base (7) de façon à abaisser la palette de sortie (BU) et à la rendre solidaire avec la charge ;
- activation du moteur de rotation (11, 12) des premier (3) et second (4) moyens formant paliers de façon à faire tourner d'environ 180° les premier (5) et second (6) moyens formant rails de manière à accomplir le renversement de la palette de sortie (BU) et de sa charge (C) ;
- activation de l'actionneur de translation du premier moyen formant base (7) de façon à abaisser le premier moyen formant base (7) jusqu'à ce qu'il devienne coplanaire aux convoyeurs de sortie (18) ;
- activation des moteurs du convoyeur du premier moyen formant base (7) et des convoyeurs de sortie (18), en décalant vers la sortie la palette de sortie (BU) sur laquelle repose la charge (C).
